# FASCICULE DE BREVET EUROPEEN

(11) **EP 4 384 771 B1**
(45) Date de publication et mention de la délivrance du brevet: **10.09.2025**
(21) Numéro de dépôt: 22754442.6
(22) Date de dépôt: 29.07.2022
(51) Int. Cl.: F41H 11/30, B60C 7/10, B60G 11/27, B60G 3/14, B60G 21/06

(54) **SYSTÈME DE LEURRAGE MASSIQUE A ROUES ÉLASTIQUEMENT DÉFORMABLES**
MASSENSCHEINSYSTEM MIT ELASTISCH VERFORMBAREN RÄDERN
MASS DECOY SYSTEM WITH ELASTICALLY DEFORMABLE WHEELS

(30) Priorité: 09.08.2021 FR 2108510
(43) Date de publication de la demande: 19.06.2024
(73) Titulaire: Sera Ingenierie, 91140 Villebon sur Yvette (FR)
(72) Inventeur: CROSNIER, Sylvain, 78960 Voisins le Bretoneux (FR); SOUTHWAY, Rudy, 91190 Gif sur Yvette (FR)
(74) Mandataire: Junca, Eric
(86) Numéro de dépôt international: PCT/EP2022/071459
(87) Numéro de publication internationale: WO 2023/016833

(56) Documents cités:
- EP-A1- 2 243 644
- DE-T2- 60 031 554
- US-A1- 2011 048 217
- US-A1- 2013 327 203
- US-A1- 2018 029 422
- US-A1- 2019 375 239
- US-A1- 2020 114 687

## Description

### DOMAINE TECHNIQUE

L'invention concerne le domaine des dispositifs de défense destinés à protéger un véhicule contre des dangers présents dans le sol, notamment des engins explosifs. L'invention concerne plus particulièrement un système de leurrage massique, c'est-à-dire un système destiné à être accouplé à un véhicule à protéger et adapté à exercer une pression sur le sol, à l'avant du véhicule, afin de déclencher les éventuels engins explosifs présents sur la trajectoire du véhicule à protéger.

Les systèmes de leurrage massique comportent généralement un châssis accouplé à l'avant d'un véhicule à protéger et muni d'un train de roues pour exercer une pression sur le sol.

### ART ANTÉRIEUR

Les mines antipersonnel et antichars, les engins explosifs improvisés (EEI), et de manière générale tout type d'engin explosif déclenchés par le passage d'un véhicule, constituent une menace pour les véhicules amenés à circuler sur des itinéraires ou ces engins explosifs pourraient se trouver.

Les systèmes de leurrage massique sont des moyens de se prémunir contre cette menace. Les systèmes de leurrage massique sont généralement disposés à l'avant d'un véhicule suiveur à protéger, et sont équipés le plus souvent de roues dont le passage sur les capteurs provoque le déclenchement de l'engin explosif.

Les roues du système de leurrage massique sont chargées d'activer les engins explosifs et doivent être placées le plus en avant possible pour écarter au maximum le véhicule suiveur de l'endroit où se produit l'explosion de l'engin explosif leurré.

Ce type de système est apparu dès la première guerre mondiale et a été développé lors de la seconde guerre mondiale.

Les réalisations plus récentes ont amélioré ces systèmes en remplaçant des rouleaux métalliques par des juxtapositions de roues suspendues de façon à améliorer le suivi de terrain lors du mouvement du véhicule. Un gain d'efficacité a ainsi été obtenu, au prix d'une perte de longévité.

Les systèmes de leurrage massique de l'art antérieur se basent généralement sur l'agencement de trains de roues de type automobile ou de type génie civil. Les trains de roues de type automobile sont performants lors des phases de roulage, entre les zones à risque, mais sont moins performants pour les phases de leurrage elles-mêmes. À l'inverse, les trains de roues de type génie civil sont plus performants lors des phases de leurrage, mais sont moins performants lors des phases de roulage. L'art antérieur souffre de la nécessité d'un compromis entre la performance de leurrage, la durabilité des trains de roues, et la mobilité du convoi.

Des suspensions sont prévues et dimensionnées pour rendre ce compromis plus acceptable. La demande de brevet EP2672218 décrit un système de leurrage massique qui comporte des vérins améliorant la constance de l'appui au sol, même en cas de sol inégal. US 2013/327203 A1 et US 2011/048217 A1 décrivent des systèmes de leurrage massique qui comportent un châssis muni d'au moins un train roulant adapté à exercer une pression sur le sol, le train roulant comportant une suspension comprenant au moins deux éléments de ressort à gaz comprimé, un dispositif d'égalisation des pressions de ces éléments de ressorts et au moins deux roues. US 2020/114687 A1 décrit des roues qui comprennent un moyeu monté sur le châssis selon une liaison pivot, une jante élastiquement déformable, des rayons élastiquement déformables reliant le moyeu à la jante et une bande de roulement fixée sur la périphérie de la jante.

### EXPOSÉ DE L'INVENTION

L'invention a pour but d'améliorer les moyens de leurrage massique de l'art antérieur.

À cet effet, l'invention vise un système de leurrage massique destiné à la protection d'un véhicule suiveur, ce système de leurrage massique comportant un châssis muni d'au moins un train roulant adapté à exercer une pression sur le sol de sorte à définir une voie sécurisée. Dans ce système de leurrage massique : le train roulant comporte une suspension comprenant au moins deux éléments de ressort à gaz comprimé et un dispositif d'égalisation des pressions de ces éléments de ressorts ; et le train roulant comporte au moins deux roues qui comprend :
- un moyeu monté sur le châssis selon une liaison pivot ;
- une jante élastiquement déformable ;
- des rayons élastiquement déformables reliant le moyeu à la jante ;
- une bande de roulement fixée sur la périphérie de la jante.

Selon un autre objet, l'invention vise un convoi comportant un véhicule suiveur à protéger, et un système de leurrage massique tel que décrit ci-dessus, relié au véhicule suiveur.

Le système de leurrage massique selon l'invention présente une importante résistance aux agressions diverses (projectiles, pierres coupantes) susceptibles d'affecter les trains roulants. Les accidents relatifs à des crevaisons, des pneus déjantés, etc. ne sont tout simplement pas possibles.

Par ailleurs, le système de leurrage massique selon l'invention présente une aire de contact au sol qui est constante, à la différence des roues de l'art antérieur de type automobile, qui souffrent d'une augmentation importante de leur aire de contact au sol lorsque la charge augmente, ce qui réduit la pression effectivement exercée sur le sol et donc réduit la capacité à déclencher les engins explosifs.

Le système de leurrage massique selon l'invention présente de plus un comportement dynamique amélioré lors des phases de leurrage, grâce au comportement élastique conjoint de la suspension, de la jante, et des rayons élastiquement déformables, à l'inverse des roues de type génie civil dont la dureté et la tendance au rebond nuisent à la constance de l'appui sur le sol.

Lors des phases de roulage (lorsque le véhicule protégé par le système de leurrage massique se déplace à vitesse élevée sur la route, entre les zones à risque), les roues du système de leurrage massique présentent une excellente longévité, la bande de roulement étant protégée des dégradations par le comportement élastique de la jante et des rayons élastiquement déformables.

La conception des roues du système de leurrage massique selon l'invention autorise un large de choix dans le diamètre des roues, sans nuire à l'inertie des trains roulants. Des roues de grand diamètre peuvent ainsi être prévues pour des systèmes de leurrage massique destiné au franchissement de zones ensablées, par exemple. L'augmentation du diamètre des roues se fait avec une faible augmentation de la masse compte tenu de l'architecture de liaison entre le moyeu et la jante par de grands rayons élastiquement déformables. La bande de roulement peut de plus comporter des empreintes ou éléments saillants, facilitant encore le franchissement, sans nuire à la performance de leurrage grâce à cette architecture de roues.. L'architecture de liaison entre le moyeu et la jante permet aussi de suivre un dévers transversal du sol et de maintenir la pression au sol égale, ce qui n'est pas possible avec des roues rigides comme les galets de génie civil.

Un tel système de leurrage massique bénéficie d'une architecture de suspension qui entre en synergie avec le comportement élastique des roues pour procurer un gain aussi bien durant les phases de leurrage que durant les phases de roulage.

La fonction élastique de la suspension est assurée conjointement par le comportement élastique de la jante, par les rayons élastiquement déformables, et par les éléments de ressort à égalisation de pression. La fonction élastique des éléments de ressort peut être assurée par des moyens simples qui s'affranchissent, en comparaison à l'art antérieur, des nombreux joints entre des tiges de vérins et des corps de vérins, et des joints entre les pistons de vérins et les corps de vérins. La pression est de plus moyennée entre les éléments de ressort sans nécessiter de moyens d'étanchéité complexes.

Les éléments de ressort ne limitent que très peu le diamètre des orifices de connexion fluidiques, donc des conduits de jonction entre les éléments ressorts. Un diamètre limité (comme c'est le cas avec des vérins) conduit en effet à des pertes de charge importantes et à un délai important pour que les chambres des vérins de l'art antérieur égalisent leur pression lors du mouvement de montée ou de descente d'une ou plusieurs roues, ce qui nuit à la permanence d'un appui constant.

Le système de leurrage massique selon l'invention bénéficie ainsi d'une bonne constance dans l'appui des roues sur le sol, grâce à un débit de gaz important pouvant varier rapidement grâce à des pertes de charge fortement minimisées, avec d'importants volumes de gaz mis en jeu de façon à lisser les fluctuations de pression. Une égalisation réactive des pressions entre les roues est aussi obtenue, grâce à des moyens robustes qui ne nécessitent que peu de jonctions étanches et qui ne nécessitent pas de raccords mobiles ou de tuyaux flexibles.

Le système de leurrage massique selon l'invention peut comporter les caractéristiques additionnelles suivantes, seules ou en combinaison :
- la bande de roulement est constituée de couches de matériau plein ;
- la bande de roulement comporte des sculptures ;
- la jante est réalisée par un cylindre de matériau élastiquement déformable ;
- les rayons présentent un profil ondulé dans leur cheminement entre la jante et le moyeu ;
- le moyeu comporte des nervures de renfort ;
- le moyeu, les rayons et la jante sont réalisés d'une seule pièce moulée ;
- le train roulant comporte un corps et un bras de suspension articulé sur le corps pour chaque roue, le moyeu de la roue étant monté selon une liaison pivot sur le bras de suspension, et les éléments de ressorts comportent chacun un coussin pneumatique reliant le bras de suspension et le corps ;
- le coussin pneumatique comporte une enceinte déformable remplie d'un gaz sous pression ;
- le coussin pneumatique comporte au moins une zone de striction ;
- le coussin pneumatique s'étend selon une direction longitudinale entre le bras de suspension et le corps, et le coussin pneumatique comporte un orifice d'égalisation de pression débouchant selon cette direction longitudinale ;
- le système comporte une pluralité de coussins pneumatiques relatifs chacun à une roue, et ces coussins pneumatiques sont fluidiquement connectés entre eux par l'intermédiaire d'un réservoir ;
- le réservoir est constitué d'une chambre interne au corps ;
- le réservoir est constitué par une tuyauterie montée sur le corps.

### PRÉSENTATION DES FIGURES

D'autres caractéristiques et avantages de l'invention ressortiront de la description non limitative qui suit, en référence aux dessins annexés dans lesquels :
- la figure 1 illustre schématiquement un convoi comportant un système de leurrage massique selon l'invention, vu de dessus ;
- la figure 2 est une vue de profil d'un train roulant du dispositif de leurrage massique de la figure 1 ;
- la figure 3 illustre une roue du dispositif de leurrage massique ;
- la figure 4 représente en vue de face le train roulant de la figure 2 ;
- la figure 5 illustre une variante du train roulant de la figure 4.

Les éléments similaires et communs aux divers modes de réalisation portent les mêmes numéros de renvoi aux figures.

### DESCRIPTION DÉTAILLÉE

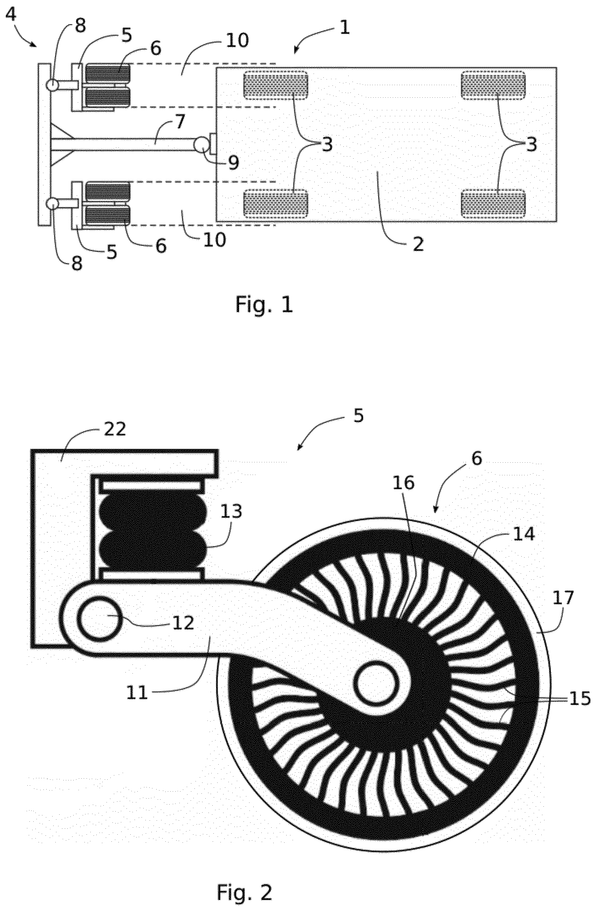

La figure 1 illustre un exemple de structure générale d'un convoi 1 avec leurrage massique.

Ce convoi 1 est constitué d'un véhicule suiveur 2 comportant quatre roues 3 dont les deux roues avant sont directrices, dans le présent exemple. Ce véhicule suiveur 2 est destiné à être protégé des dangers dissimulés au sol, dans le cadre de l'application de l'invention. Le convoi 1 comporte pour cela un système de leurrage massique 4 accouplé à l'avant du véhicule suiveur 2.

Le système de leurrage massique 4 comporte des moyens roulants pour exercer une pression sur le sol à l'avant du véhicule suiveur 2 de manière à déclencher d'éventuels engins explosifs rencontrés, préservant ainsi le véhicule suiveur 2 de l'explosion. La distance entre les moyens roulants exerçant une pression sur le sol et l'avant du véhicule suiveur 2 doit donc être assez importante pour que le véhicule suiveur 2 soit suffisamment éloigné au moment de l'explosion.

Le système de leurrage massique 4 comporte une poutre centrale 7 sur laquelle sont rattachés deux trains roulants 5 munis chacun de deux roues 6. Les trains roulants 5 sont articulés sur la poutre centrale 7 par une articulation 8, permettant au moins un pivotement en lacet des roues 6 ou des trains roulants 5. La rotule 8 peut optionnellement permettre un pivotement du train roulant 5 par rapport à un axe parallèle à la direction de déplacement du convoi 1, pour permettre au train roulant de suivre par exemple un devers sur la route tandis que la poutre centrale est maintenue horizontale.

En variante, toute autre architecture connue peut être prévue pour le système de leurrage massique 4 (par exemple, des trains roulants fixes et une poutre centrale orientable, par rapport au véhicule suiveur, grâce à des vérins).

La poutre centrale 7 peut être raccordée au véhicule suiveur 2 par une articulation 9, permettant un pivotement de la poutre centrale 7 en lacet, en roulis et en tangage.

Les roues 6 présentent un poids suffisant pour que leur pression sur le sol soit compatible avec la fonction recherchée de déclenchement d'engin explosif, et sont montées sur des suspensions à élément élastique à gaz comprimé, comportant des égaliseurs de pression.

Le système de leurrage massique 4 définit une voie sécurisée 10 dans laquelle les roues 3 du véhicule suiveur 2 peuvent rouler en sécurité.

La figure 2 illustre l'un des trains roulants 5, vu de côté.

Chacune des roues 6 (sur la vue de profil de la figure 2, seule une roue 6 est visible) est rattachée au train roulant 5 par une suspension comportant un élément de ressort à gaz dont la pression est égalisée avec les éléments de ressort des autres roues.

Chaque train roulant 5 comporte un corps 22. Pour chaque roue 6 du train roulant 5, un bras de suspension 11 est relié par une liaison pivot 12 au corps 22. Le bras de suspension 11 est mobile par rapport au reste du châssis selon un débattement sensiblement vertical.

L'élément de ressort de la suspension comporte ici un coussin pneumatique 13 qui est intercalé entre le corps 22 et le bras de suspension 11. Tout autre élément complémentaire peut être associé au coussin pneumatique 13 pour compléter sa fonction de ressort ou pour ajouter une fonction d'amortissement à la suspension.

Chacune des roues 6 est constituée à sa périphérie d'une jante 14 reliée par des rayons élastiquement déformables 15 à un moyeu 16 qui est monté tournant sur le bras de suspension 11. Tout moyen connu permettant de réaliser une liaison pivot entre le moyeu 16 et le bras de suspension 11 peut être employé, par exemple un roulement de roue.

La roue 6 comporte de plus une bande de roulement 17 fixée à la périphérie de la jante 14.

La jante 14 et les rayons 15 sont réalisés en un matériau élastiquement déformable. La bande de roulement 17 est quant à elle suffisamment souple pour suivre les déformations de la jante 14 compte tenu de son caractère élastique.

L'expression « élastiquement déformable » désigne dans la présente demande des propriétés de déformation élastique qui vont au-delà de la faible plage de déformation élastique que peuvent subir tous les matériaux, y compris les métaux. Les métaux sont notamment exclus pour constituer la jante 14 et les rayons 15 car une plage de déformation élastique bien supérieure est ici requise. Dans le présent exemple, ces éléments sont réalisés par un polymère fortement déformable ou un matériau composite élastique.

Le moyeu 16, les rayons 15 et la jante 14 peuvent aussi être réalisés d'une seule pièce par moulage d'un polymère présentant de bonnes propriétés élastiques.

Le système de leurrage massique comporte ainsi un châssis (comportant ici la poutre centrale 7, les trains roulants 5, les bras de suspension 11, etc) sur lequel sont montées les roues 6 par une liaison pivot 20.

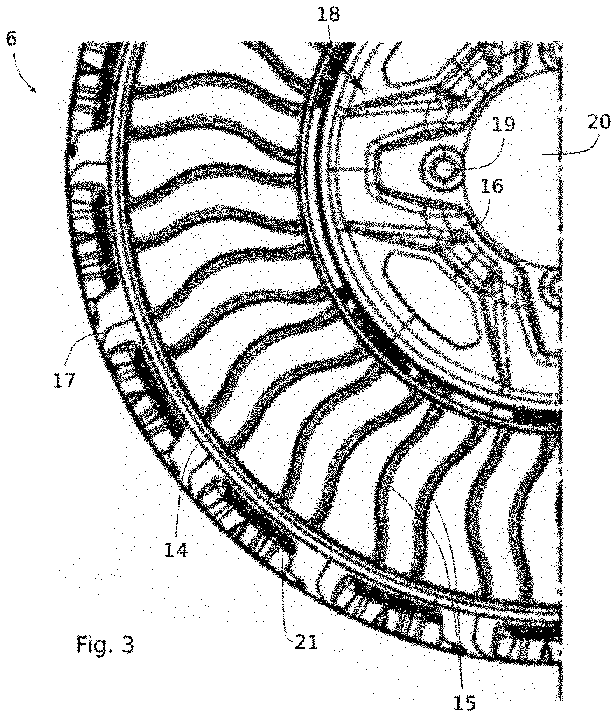

La figure 3 est une vue de détail d'une roue 6. Dans cet exemple, le moyeu 16 présente une épaisseur suffisante ainsi que des nervures de renfort 18 lui garantissant une certaine rigidité, car le moyeu 16 n'est pas destiné à fournir un comportement élastique. Le moyeu 18 est ici fixé par des vis 19 sur la liaison pivot 20 qui est ici constituée par un roulement de roue relié au bras de suspension 11.

Les rayons 15 présentent dans cet exemple un profil ondulé dans leur cheminement entre la jante 14 et le moyeu 16, favorisant leur fléchissement, pour suivre les fortes déformations élastiques permises à la jante 14. La bande de roulement 17, qui est constituée de matériaux souples adaptés au contact avec le sol et suffisamment durables, est suffisamment flexible pour suivre également la déformation possible de la jante 14, qui est réalisée par un cylindre de matériau élastiquement déformable.

La bande de roulement 17 est ici constituée d'une bande de matériau plein (c'est-à-dire sans chambre interne) et comporte ici des sculptures 21 permettant l'accroche sur un terrain meuble, comme pour les pneumatiques classiques. En variante, la bande de roulement 17 peut être une bande pleine et lisse ou peut comporter plusieurs couches aux propriétés différentes (de la même manière que la bande de roulement d'un pneumatique classique). Quoi qu'il en soit, la bande de roulement n'a pas vocation à contenir de l'air sous pression, ce rôle étant laissé au coussin pneumatique 13.

L'ensemble des élasticités des rayons 15, de la jante 14, et de la bande de roulement 17 est de préférence dimensionné pour conférer à la roue des caractéristiques de raideur et d'amortissement comparables à un pneumatique destiné au même emploi.

La roue 6 est ainsi en contact avec le sol avec une déformation radiale autorisée, de façon à permettre au profil de la bande de roulement 17 de rester en tout point au contact avec le sol.

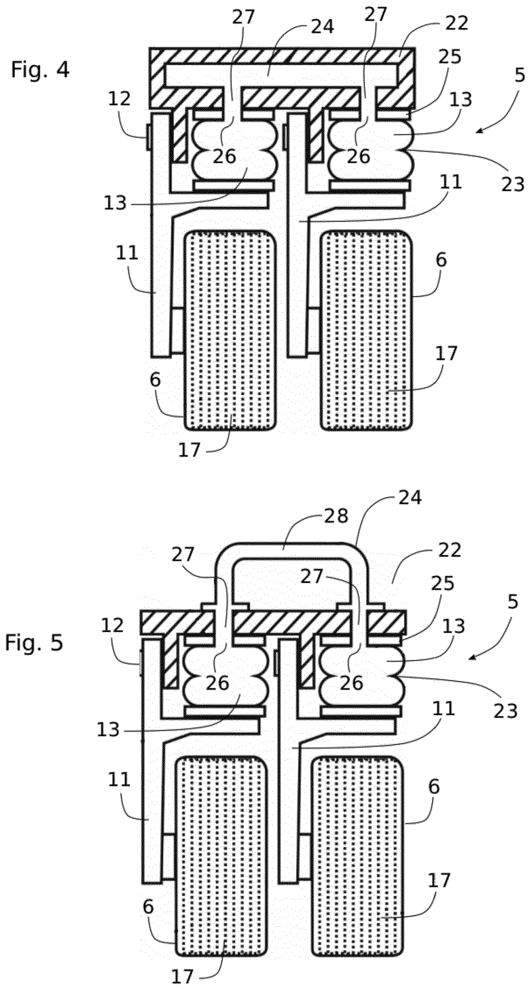

La figure 4 illustre l'un des trains roulants 5, vu de face. Dans cet exemple à deux roues 6 par train roulant 5, les deux bras de suspension 11, correspondant chacun à une roue 6, sont montés sur le corps 22 du train roulant 5.

Les coussins pneumatiques 13 sont réalisés en un matériau souple permettant de contenir un gaz comprimé. Le coussin pneumatique 13 est formé d'une enceinte déformable remplie d'un gaz sous pression.

Les coussins pneumatiques 13 présentent ici une forme de soufflet grâce à des zones de striction 23 (une seule zone de striction 23 par coussin pneumatique 13 est prévue dans cet exemple). Chaque coussin pneumatique 13 autorise ainsi le débattement du bras de suspension 11. Lors de la compression du coussin pneumatique 13, le gaz qui y est contenu (par exemple de l'air) est comprimé et constitue un ressort.

Le corps 22 du train roulant 5 est ici creux et définit un réservoir interne 24 qui est donc constitué d'une chambre interne au corps 22. Les coussins pneumatiques 13 sont mécaniquement reliés au corps 22 et sont de plus fluidiquement connectés au réservoir interne 24.

Le rattachement fluidiquement étanche entre chaque coussin pneumatique 13 et le réservoir interne 24 ne nécessite qu'un simple raccord 25 (qui est fixe et non coulissant ou tournant), garantissant une étanchéité à l'air entre un orifice supérieur 26 et un conduit 27 menant au réservoir interne 24.

Le réservoir interne 24 prend place au sein du corps 22 du train roulant 5 et peut donc être prévu avec une grande capacité sans impacter les éléments mobiles de la suspension. Le dimensionnement du réservoir interne 24 doit cependant être prévu pour obtenir une raideur verticale moyenne de l'ensemble des roues 6 qui soit acceptable. Le système comporte ainsi une pluralité de coussins pneumatiques 13 relatifs chacun à une roue 6, et ces coussins pneumatiques 13 sont fluidiquement connectés entre eux par l'intermédiaire du réservoir 24.

Le conduit 27 et l'orifice 26 sont peu limités en diamètre compte tenu de la forme du coussin pneumatique 13, choisi de préférence avec un grand diamètre, et les conduits 27 et orifices 26 peuvent ainsi être dimensionnés largement pour éviter les pertes de charge. Ces éléments contribuent à une bonne réactivité dans la répartition des pressions. Pour cela, le coussin pneumatique 13 s'étend selon une direction longitudinale (la direction verticale sur les figures 4 et 5) entre le bras de suspension 11 et le corps 22, et l'orifice 26 débouche selon cette direction longitudinale.

Le coussin pneumatique 13 porte l'effort vertical et assure la raideur de suspension, sans nécessiter d'articulation d'extrémité comme c'est le cas pour un vérin.

Les coussins pneumatiques 13 sont de préférence prévus dans un matériau robuste et peu vulnérable aux fuites, ils ne comportent pas de pièce en frottement relatif. Ils peuvent aussi être avantageusement protégés par le mode de réalisation de la partie mécanique du bras de suspension 11 et du corps 22.

La figure 5 illustre une variante de réalisation du train roulant de la figure 4. Selon cette variante, la fonction du réservoir interne 24 est remplacée par une tuyauterie 28 montée sur le corps 22, et qui ne fait donc pas partie intégrante du corps 22.

La tuyauterie 28 (illustrée sur cette vue schématique par un seul tuyau) peut être rigide et vissée ou soudée dans la mesure où cette tuyauterie 28 est fixe par rapport au corps 22, sans mouvement relatif. Ce montage reste simple et bien protégé, et permet des débits d'échange importants en prévoyant des grandes sections de tuyau.

Des variantes de réalisation du système de leurrage massique selon l'invention peuvent être mises en œuvre. Par exemple, le débattement entre les roues 6 et le châssis peut être assuré par d'autres éléments connus, par exemple par des systèmes à parallélogramme déformable ou autres articulations, tout en comportant un élément de ressort constitué d'un coussin pneumatique.

## Revendications

1. Système de leurrage massique (4) destiné à la protection d'un véhicule suiveur (2), ce système de leurrage massique (4) comportant un châssis muni d'au moins un train roulant (5) adapté à exercer une pression sur le sol de sorte à définir une voie sécurisée (10), le ou chaque train roulant (5) comportant une suspension comprenant au moins deux éléments de ressort à gaz comprimé et un dispositif d'égalisation des pressions de ces éléments de ressorts ; le système de leurrage massique étant **caracterisé en ce que** le ou chaque train roulant (5) comporte au moins deux roues (6) qui comprennent :
- un moyeu (16) monté sur le châssis selon une liaison pivot (20) ;
- une jante (14) élastiquement déformable ;
- des rayons (15) élastiquement déformables reliant le moyeu (16) à la jante (14) ;
- une bande de roulement (17) fixée sur la périphérie de la jante (14).

2. Système de leurrage massique selon la revendication 1, **caractérisé en ce que** la bande de roulement (17) est constituée de couches de matériau plein.

3. Système de leurrage massique selon l'une des revendications précédentes, **caractérisé en ce que** la bande de roulement (17) comporte des sculptures (21).

4. Système de leurrage massique selon l'une des revendications précédentes, **caractérisé en ce que** la jante (14) est réalisée par un cylindre de matériau élastiquement déformable.

5. Système de leurrage massique selon l'une des revendications précédentes, **caractérisé en ce que** les rayons (15) présentent un profil ondulé dans leur cheminement entre la jante (14) et le moyeu (16).

6. Système de leurrage massique selon l'une des revendications précédentes, **caractérisé en ce que** le moyeu (16) comporte des nervures de renfort (18).

7. Système de leurrage massique selon l'une des revendications précédentes, **caractérisé en ce que** le moyeu (16), les rayons (15) et la jante (14) sont réalisés d'une seule pièce moulée.

8. Système de leurrage massique selon l'une des revendications précédentes, **caractérisé en ce que** : le train roulant (5) comporte un corps (22) et un bras de suspension (11) articulé sur le corps (22) pour chaque roue (6), le moyeu (16) de la roue (6) étant monté selon une liaison pivot (20) sur le bras de suspension (11) ; et **en ce que** les éléments de ressorts comportent chacun un coussin pneumatique (13) reliant le bras de suspension (11) et le corps (22).

9. Système de leurrage massique selon la revendication 8, **caractérisé en ce que** le coussin pneumatique (13) comporte une enceinte déformable remplie d'un gaz sous pression.

10. Système de leurrage massique selon l'une des revendications 8 ou 9, **caractérisé en ce que** le coussin pneumatique (13) comporte au moins une zone de striction (23).

11. Système de leurrage massique selon l'une des revendications 8 à 10, **caractérisé en ce que** le coussin pneumatique (13) s'étend selon une direction longitudinale entre le bras de suspension (11) et le corps (22), et **en ce que** le coussin pneumatique (13) comporte un orifice (26) d'égalisation de pression débouchant selon cette direction longitudinale.

12. Système de leurrage massique selon l'une des revendications 8 à 11, **caractérisé en ce qu'**il comporte une pluralité de coussins pneumatiques (13) relatifs chacun à une roue (6), et **en ce que** ces coussins pneumatiques (13) sont fluidiquement connectés entre eux par l'intermédiaire d'un réservoir (24).

13. Système de leurrage massique selon la revendication 12, **caractérisé en ce que** le réservoir (24) est constitué d'une chambre interne au corps (22).

14. Système de leurrage massique selon la revendication 12, **caractérisé en ce que** le réservoir (24) est constitué par une tuyauterie (28) montée sur le corps (22).

15. Convoi (1) comportant un véhicule suiveur (2) à protéger, **caractérisé en ce qu'**il comporte un système de leurrage massique (4) selon l'une des revendications 1 à 14, relié au véhicule suiveur (2).

## Patentansprüche

1. Massentäuschungssystem (4), das zum Schutz eines nachfolgenden Fahrzeugs (2) bestimmt ist, wobei das Massentäuschungssystem (4) ein Gestell aufweist, das mit mindestens einem Fahrwerk (5) ausgestattet ist, das dazu ausgelegt ist, einen Druck auf den Boden auszuüben, um eine gesicherte Spur (10) zu definieren, wobei das bzw. jedes Fahrwerk (5) eine Aufhängung aufweist, die mindestens zwei Gasdruckfederelemente und eine Vorrichtung zum Ausgleichen der Drücke dieser Federelemente umfasst; wobei das Massentäuschungssystem **dadurch gekennzeichnet ist, dass** das bzw. jedes Fahrwerk (5) mindestens zwei Räder (6) aufweist, die Folgendes umfassen:
- eine Nabe (16), die entlang einer Schwenkverbindung (20) am Gestell montiert ist;
- eine elastisch verformbare Felge (14);
- elastisch verformbare Speichen (15), die die Nabe (16) mit der Felge (14) verbinden;
- eine Lauffläche (17), die auf dem Umfang der Felge (14) befestigt ist.

2. Massentäuschungssystem nach Anspruch 1, **dadurch gekennzeichnet, dass** die Lauffläche (17) aus Vollmaterialschichten ausgebildet ist.

3. Massentäuschungssystem nach einem der vorangehenden Ansprüche, **dadurch gekennzeichnet, dass** die Lauffläche (17) ein Profil (21) aufweist.

4. Massentäuschungssystem nach einem der vorangehenden Ansprüche, **dadurch gekennzeichnet, dass** die Felge (14) durch einen Zylinder aus elastisch verformbarem Material ausgebildet ist.

5. Massentäuschungssystem nach einem der vorangehenden Ansprüche, **dadurch gekennzeichnet, dass** die Speichen (15) auf ihrem Weg zwischen der Felge (14) und der Nabe (16) ein Wellenprofil aufweisen.

6. Massentäuschungssystem nach einem der vorangehenden Ansprüche, **dadurch gekennzeichnet, dass** die Nabe (16) Verstärkungsrippen (18) aufweist.

7. Massentäuschungssystem nach einem der vorangehenden Ansprüche, **dadurch gekennzeichnet, dass** die Nabe (16), die Speichen (15) und die Felge (14) aus einem einzigen Formteil ausgebildet sind.

8. Massentäuschungssystem nach einem der vorangehenden Ansprüche, **dadurch gekennzeichnet, dass**: das Fahrwerk (5) einen Körper (22) und einen am Körper (22) angelenkten Aufhängungsarm (11) für jedes Rad (6) aufweist, wobei die Nabe (16) des Rads (6) entlang einer Schwenkverbindung (20) am Aufhängungsarm (11) montiert ist; und dass die Federelemente jeweils ein pneumatisches Kissen (13) umfassen, das den Aufhängungsarm (11) und den Körper (22) verbindet.

9. Massentäuschungssystem nach Anspruch 8, **dadurch gekennzeichnet, dass** das pneumatische Kissen (13) einen verformbaren Raum aufweist, der mit einem druckbeaufschlagten Gas gefüllt ist.

10. Massentäuschungssystem nach einem der Ansprüche 8 oder 9, **dadurch gekennzeichnet, dass** das pneumatische Kissen (13) mindestens einen Einschnürungsbereich (23) aufweist.

11. Massentäuschungssystem nach einem der Ansprüche 8 bis 10, **dadurch gekennzeichnet, dass** sich das pneumatische Kissen (13) entlang einer Längsrichtung zwischen dem Aufhängungsarm (11) und dem Körper (22) erstreckt und dass das pneumatische Kissen (13) eine Druckausgleichsöffnung (26) aufweist, die entlang dieser Längsrichtung mündet.

12. Massentäuschungssystem nach einem der Ansprüche 8 bis 11, **dadurch gekennzeichnet, dass** es eine Mehrzahl von jeweils auf ein Rad (6) bezogenen pneumatischen Kissen (13) aufweist und dass diese pneumatischen Kissen (13) über einen Behälter (24) fluidisch miteinander verbunden sind.

13. Massentäuschungssystem nach Anspruch 12, **dadurch gekennzeichnet, dass** der Behälter (24) aus einer Kammer innerhalb des Körpers (22) ausgebildet ist.

14. Massentäuschungssystem nach Anspruch 12, **dadurch gekennzeichnet, dass** der Behälter (24) aus einer am Körper (22) montierten Rohrleitung (28) ausgebildet ist.

15. Konvoi (1) mit einem zu schützenden nachfolgenden Fahrzeug (2), **dadurch gekennzeichnet, dass** er ein mit dem nachfolgenden Fahrzeug (2) verbundenes Massentäuschungssystem (4) nach einem der Ansprüche 1 bis 14 aufweist.

## Claims

1. Mass decoy system (4) intended for the protection of a follower vehicle (2), this mass decoy system (4) comprising a chassis provided with at least one running gear (5) adapted to exert pressure on the ground so as to define a secure path (10), the one or each running gear (5) comprises a suspension comprising at least two compressed gas spring elements and a device for equalizing the pressures of these spring elements; this mass decoy system (4) being **characterized in that** the one or each running gear (5) comprises at least two wheels (6) which comprise:
- a hub (16) mounted on the chassis according to a pivot connection (20);
- an elastically deformable rim (14) ;
- elastically deformable spokes (15) connecting the hub (16) to the rim (14) ;
- a tread (17) fixed on the periphery of the rim (14).

2. Mass decoy system according to claim 1, **characterized in that** the tread (17) is made of layers of solid material.

3. Mass decoy system according to one of the preceding claims, **characterized in that** the tread (17) comprises sculptures (21).

4. Mass decoy system according to one of the preceding claims, **characterized in that** the rim (14) is made of a cylinder of elastically deformable material.

5. Mass decoy system according to one of the preceding claims, **characterized in that** the spokes (15) have a wavy profile in their path between the rim (14) and the hub (16)

6. Mass decoy system according to one of the preceding claims, **characterized in that** the hub (16) comprises reinforcing ribs (18).

7. Mass decoy system according to one of the preceding claims, **characterized in that** the hub (16), the spokes (15) and the rim (14) are made from a single molded part.

8. Mass decoy system according to one of the preceding claims, **characterized in that**: the running gear (5) comprises a body (22) and a suspension arm (11) articulated on the body (22) for each wheel (6), the hub (16) of the wheel (6) being mounted according to a pivot connection (20) on the suspension arm (11); and **in that** the spring elements each comprise a pneumatic cushion (13) connecting the suspension arm (11) and the body (22).

9. Mass decoying system according to claim 8, **characterized in that** the pneumatic cushion (13) comprises a deformable enclosure filled with a pressurized gas.

10. Mass decoy system according to one of claims 8 or 9, **characterized in that** the pneumatic cushion (13) comprises at least one constriction zone (23).

11. Mass decoy system according to one of claims 8 to 10, **characterized in that** the pneumatic cushion (13) extends in a longitudinal direction between the suspension arm (11) and the body (22), and **in that** the pneumatic cushion (13) comprises a pressure equalization orifice (26) opening in this longitudinal direction.

12. Mass decoying system according to one of claims 8 to 11, **characterized in that** it comprises a plurality of pneumatic cushions (13) each relating to a wheel (6), and **in that** these pneumatic cushions (13) are fluidically connected to each other via a reservoir (24).

13. Mass decoying system according to claim 12, **characterized in that** the reservoir (24) consists of a chamber internal to the body (22).

14. Mass decoying system according to claim 12, **characterized in that** the reservoir (24) is constituted by a piping (28) mounted on the body (22)

15. Convoy (1) comprising a follower vehicle (2) to be protected, **characterized in that** it comprises
a mass decoy system (4) according to one of claims 1 to 14, connected to the follower vehicle (2).
